Europäisches Patentamt

European Patent Office

Office européen des brevets

(11) Veröffentlichungsnummer: **0 211 135**
**B1**

(12) **EUROPÄISCHE PATENTSCHRIFT**

(45) Veröffentlichungstag der Patentschrift: **18.04.90**

(21) Anmeldenummer: **86102930.4**

(22) Anmeldetag: **05.03.86**

(51) Int. Cl.⁵: **B 23 B 47/28**

(54) Bohrschablone.

(30) Priorität: **09.08.85 DE 8523006 u**

(43) Veröffentlichungstag der Anmeldung:
**25.02.87 Patentblatt 87/09**

(45) Bekanntmachung des Hinweises auf die
Patenterteilung:
**18.04.90 Patentblatt 90/16**

(84) Benannte Vertragsstaaten:
**AT CH DE LI NL**

(56) Entgegenhaltungen:
**EP-A-0 061 022**
**EP-A-0 093 391**
**DE-A-2 912 605**

(73) Patentinhaber: **Eduard Schedel GmbH Bau- und**
**Möbelschreinerei**
**D-7959 Kirchberg-Sinningen (DE)**

(72) Erfinder: **Schedel, Eduard jun.**
**A. Gräble 7**
**D-7959 Sinningen (DE)**

(74) Vertreter: **Braito, Herbert, Dipl.-Ing.**
**Postfach 1140 Martin-Luther-Strasse 1**
**D-7950 Biberach/Riss 1 (DE)**

**Beschreibung**

Die Erfindung betrifft eine Bohrschablone zum Herstellen von Bohrungen für Schlösser, Drücker, Schlüssel und dergleichen an Türen.

Das Befestigen von Türschlössern am Türblatt erfordert das Anbringen verschiedenartiger Durchgangsbohrungen, die in bestimmtem Abstand und bestimmter Zuordnung am freien Randteil bzw. dem Außenfalz des Türblattes liegen. Dabei müssen entweder die Bohrungsmitten wenigstens auf einer Seite der Tür exakt angerissen und dann Vorbohrungen mit einem möglichst kleinen Durchmesser angebracht werden, oder es sind teure Bohrmaschinen erforderlich, welche an jeder Bohrachse eine gesonderte Spindel mit Spannkopf aufweisen.

Bei der erstgeschilderten Arbeitsweise ist schon das Anreißen umständlich, kompliziert und ungenau. Die Bohrung läßt sich oft nicht exakt einbringen. Bohrt man völlig durch, wird die Außenschicht des Türblattes beim Austreten des Bohrers durch Aussplittern oder dergleichen, oft erheblich beschädigt, was mitunter zum Ausschluß des ganzen Türblattes führt.

Mehrspindel-Bohrmaschinen lassen sich praktisch nur in der Werkstatt einsetzen, d.h. das Türblatt muß meist unnötig transportiert werden. Es sind zur Handhabung und Bedienung zwei Personen erforderlich, und doch hält sich die Bohrleistung in Grenzen.

Bekannt sind auch durch eine oder mehrere zusammengesetzte Platten gebildete Bohrschablonen, wie sie vornehmlich im Möbelbau verwendet werden, die meist in Reihen unter bestimmten Abständen angeordnete, mit Bohrbuchsen besetzte Bohrungen aufweisen. Dabei dienen die Bohrbuchsen entweder zur Führung eines Bohrers oder nehmen einen lösbar einzusetzenden Stift als Anschlag für eine Seitenfläche des Werkstückes auf. Eine Bohrschablone dieser Art ist zum Beispiel durch die EP-A-61 022 bekannt. Auf diese Weise läßt sich zwar eine brauchbare Ausrichtung von Werkstück und Lehre erzielen und der Bohrer in geeigneter Weise an der Lehre für den Eingriff ins Werkstück führen, aber die Handhabung ist zu umständlich und die Ausrichtung an den Anlageflächen am Werkstück bis zum Bohrereingriff noch verhältnismäßig ungenau.

Die Erfindung geht aus von der eingangs definierten Bohrschablone und verfolgt die Aufgabe, eine solche Schablone auf möglichst einfache, preisgünstige und handliche Weise so zu gestalten, daß alle erforderlichen Bohrungen zum Befestigen eines Türschlosses am Türblatt leicht, bequem und schnell von einer person ausgeführt werden können.

Zur Lösung dieser Aufgabe dienen erfindungsgemäß zwei parallel zueinander gleichliegend und gegeneinander unverdrehbar gehaltene Schablonenplatten, die mit einer Mehrzahl jeweils gleichachsiger Bohrer-Querführungen versehen und zu einem Seitenrand hin quer zu ihrer Ebene mittels einer Querverbindung verstellbar verbunden sind, die zwei zu den oberen und unteren Enden der Schablonenplatten hin angeordnete Schiebeführungen aufweist, wobei zur Anlage der Schablone mit veränderlichem Abstand einer Bezugslinie einer Schablonenplatte vom freien Rand beziehungsweise dem Türfalz eines Türblattes wenigstens ein Anschlag mit auswechselbarem oder verdrehbarem Anschlagkörper vorgesehen ist.

Die Schablonenplatten können hier Abmessungen haben, die etwa denen der einzubauenden Schloßkästen entsprechen. Die Schablone hat daher auch unter Berücksichtigung der zugehörigen Verbindungsteile geringes Gewicht und ist als vollständige Ausführung leicht zu handhaben. Sie läßt sich gegenüber Mehrspindel-Bohrmaschinen mit unvergleichlich geringeren Kosten herstellen und erfordert bei passender Ausbildung und Anordnung der Anschläge im Prinzip nur eine Ausrichtung der Höhe längs des freien Türblatt-Randes, was in herkömmlicher Weise mittels Maßstab oder auch mittels einzelner auf bestimmte Länge geschnittener Leisten erfolgen kann. Im übrigen sind lediglich die beiden Schablonenplatten von entgegengesetzten Seiten am Türblatt anzulegen und etwa durch eine Schraubzwinge festzuspannen. Dann können schnell und bequem mit einer leichten Handbohrmaschine von beiden Seiten die erforderlichen Vorbohrungen eingebracht werden, bevor mittels des oder mehrerer Zapfenbohrer mit in die Vorbohrung passenden Zapfen die Aufnahmebohrung fertiggestellt wird.

Diese Bohrungen können praktisch überall, in aller Regel in der Werkstatt, grundsätzlich jedoch auch an der Baustelle vorgenommen werden, erfordern zum Beispiel kein zwischenzeitiges Abnehmen des Türblattes und kein aufwendiges Festspannen. Zudem ist die auf diese Weise erzielte Gesamtleistung größer als beim Einsatz von Mehrspindel-Bohrmaschinen und erfordert zudem weniger Lohnkosten. Außerdem wird bei herkömmlichen Mehrspindel-Bohrmaschinen die Lochung für die Schlösser meist als Rundloch ausgeführt, was das Aufbringen von schmalen Langschildern unmöglich macht.

Um die Bohrer-Querführungen dauerhaft zu gestalten, werden sie zweckmäßigerweise mit Bohrbuchsen aus hartem und verschleißfestem Werkstoff wie gehärteter Edelstahl, gegebenenfalls auch aus Hartmetall, besetzt.

Auch die Querführungen und Anschlagkörper bestehen zweckmässigerweise aus Metall, während die Schablonenplatten aus einem formbeständigen festen und harten wärmeisolierenden Werkstoff gebildet sein können. Hierbei hat sich vielschichtiges Panzer-Sperrholz mit einer Dicke von ca. 12 bis 15 mm bewährt. Solche Platten sind relativ leichtgewichtig aber außerordentlich widerstandsfähig gegen Verformungen und Beschädigungen. Zudem ist dieser Werkstoff wärmeisolierend und erleichtert damit das Arbeiten bei extremen Temperaturen.

Zum nachträglichen Anbringen von Aufdoppelungen, Verkleidungen und dergleichen des Türblattes dient zweckmäßigerweise wenigstens ein in der Achse einer Bohrerquerführung an der Innenseite einer Schablonenplatte lösbar anzubringender Ausrichtvorsprung, der passend in eine aufgebohrte Bezugs-Bohrung eingreift. Auf diese Weise läßt sich nach vorübergehendem Abnehmen der Bohrschablone, nach dem Aufbohren und Anbringen der Aufdoppelung die Bohrschablone wieder in der ursprünglichen Stellung ausgerichtet aufsetzen, um dann das Einbringen von Vorbohrungen von der Außenseite der Aufdoppelung her zu ermöglichen.

Ein solcher Ausricht-Vorsprung wird zweckmäßigerweise in Form eines Ringes oder einer Scheibe mit Innengewinde ausgebildet, in das eine von außen durch eine Bohrbuchse eingebrachte Schraube eingreift.

Weitere Merkmale und Vorteile der Erfindung sind in den Unteransprüchen festgehalten und sollen anhand der die Erfindung beispielsweise wiedergebenden Zeichnung erläutert werden. Es zeigen:.

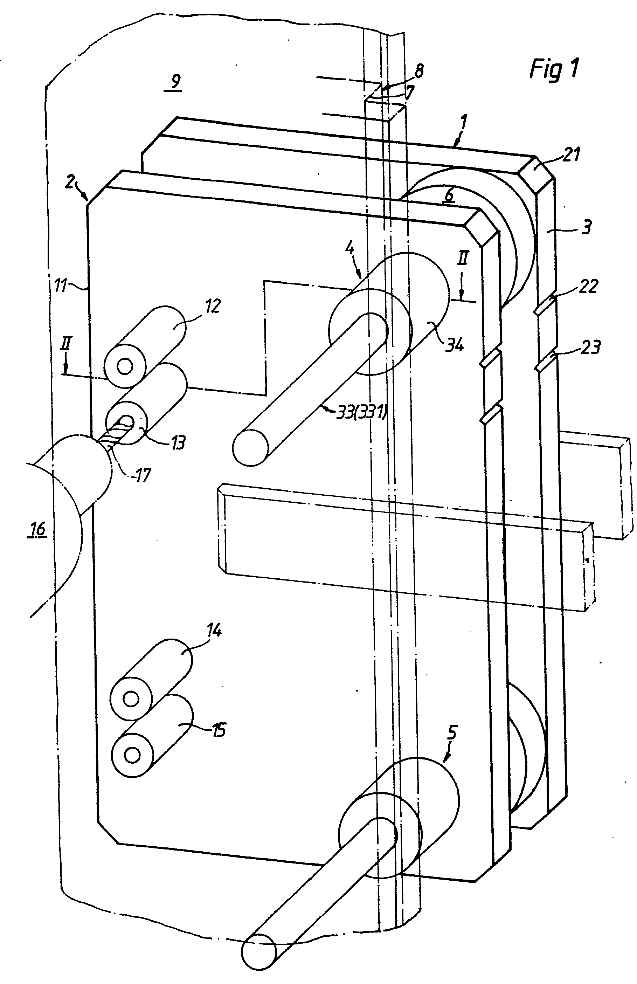

Fig. 1 eine räumliche Darstellung eines Ausführungsbeispieles der erfindungsgemäßen Bohrschablone beim Bohrvorgang,

Fig. 2 einen Schnitt durch diese Schablonenanordnung, nach der Linie II-II in Fig. 1,

Fig. 3 eine Seitenansicht der vom Werkstück abgenommenen Schablone in Richtung des Pfeiles III in Fig. 2 gesehen,

Fig. 4 eine Ansicht dieser Bohrschablone von links in Fig. 3 gesehen und

Fig. 5 eine abgewandelte Ausführung eines Anschlagkörpers.

Tragende Teile der dargestellten Bohrschablone sind zwei parallel zueinander angeordnete Schablonenplatten (1, 2), die zu ihrem hinteren Seitenrand (3) hin oben und unten quer zu ihrer Ebene wirksame Schiebeführungen (4, 5) und im Bereich dieser Schiebeführungen angebrachte Anschlagkörper (6) zur Anlage am Falz (7) oder einer entsprechenden Stirnfläche am Rand (8) eines Türblattes (9) aufweisen. Dicht am vorderen Seitenrand (11) der Schablonenplatten (1, 2) sind in einer gemeinsamen Ebene untereinander in vorgegebenen Abständen jeweils vier identische Bohrbuchsen (12-15) zum aufeinanderfolgenden Vorbohren mittels einer Handbohrmaschine (16) mit Vorbohrer (17) vorgesehen.

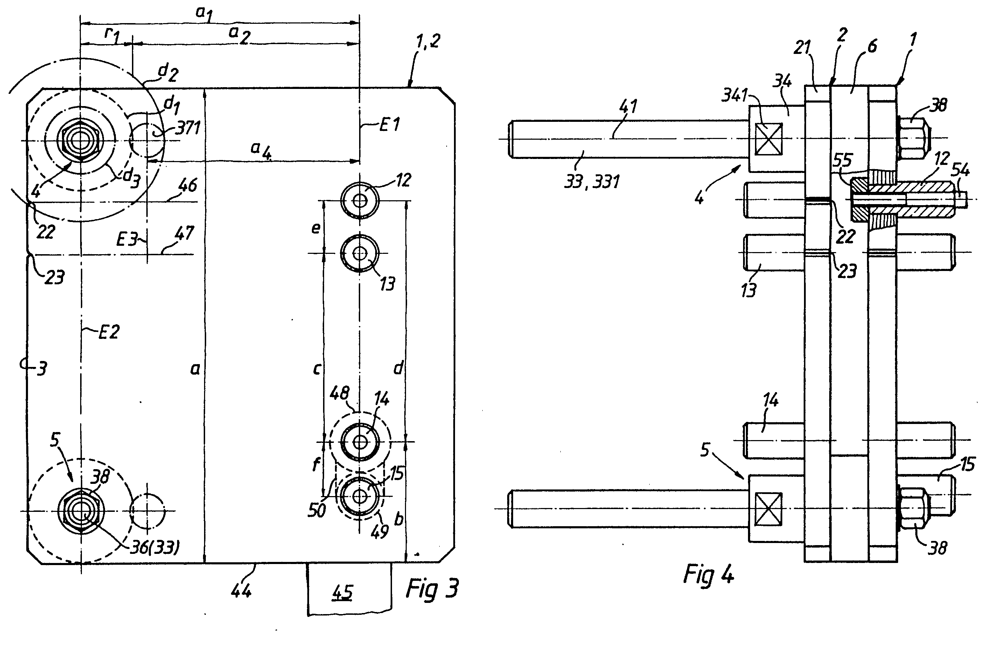

Die im Prinzip rechteckförmigen Schablonenplatten (1, 2) sind an ihren Ecken mit Schrägflächen (21) versehen. Sie bestehen aus vielschichtigem Panzersperrholz mit einer Dicke von vorzugsweise 13 mm, haben damit außergewöhnliche Formbeständigkeit und Festigkeit und sind doch wärmeisolierend, lassen sich also auch bei extremen Temperaturen leicht handhaben. Sie sind hinsichtlich ihrer Maßhaltigkeit auch nicht durch Temperaturen des Werkstückes wesentlich beeinflußt. Ihr Höhenmaß a (Fig. 3) entspricht der Höhe der üblicherweise eingesetzten Schlösser. Sie haben zudem am hinteren Seitenrand (3) zwei Kerben (22, 23) in Höhe der Achsen der Bohrbuchsen (12, 13).

Jede der Bohrbuchsen (12-15) hat im Prinzip die Form eines Zylinders mit einem vorderen abgesetzten Halsteil (24), das bis zum Ringabsatz (25) in die zugehörige Bohrung (26) der Schablonenplatte unter fester Umfangsspannung eingepreßt ist. Die zentrische Bohrung (27) einer jeden Bohrbuchse (12-15) bildet dabei eine Bohrer-Querführung für den Vorbohrer (17), der hier zweckmäßigerweise 5 mm Durchmesser hat.

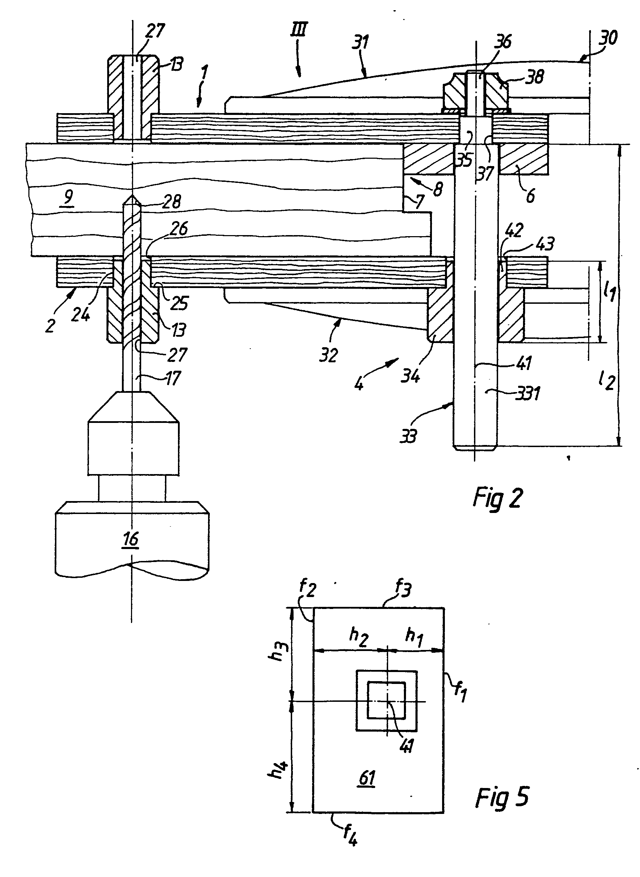

Dieser Vorbohrer ist in seiner Endstellung nach Fig. 2 etwas über die Mittelebene des Türblattes (9) durchgeführt. Das exakte Maß kann in bekannter Weise durch an der Bohrmaschine angebrachte, hier aber nicht weiter gezeigte Tiefbohranschläge begrenzt werden. Es ist nur wichtig, daß alle Vorbohrungen (28) bis auf gleiche Tiefe eingebracht werden. Zuvor muß allerdings die Bohrschablone durch die Anschlagkörper (6) am Rand (8) beziehungsweise im Falz (7) des Türblattes (9) ausgerichtet sein, und die Schablonenplatten (1, 2) müssen fest an die entgegengesetzten Seiten des Türblattes angelegt werden. Dort können sie durch die Spannbacken (31, 32) einer Schraubzwinge (30) festgespannt sein.

Die Schiebeführungen (4, 5) weisen jeweils einen an der Schablonenplatte (1) festgelegten Führungsstempel (33) und eine an der Schablonenplatte (2) festgelegte Führungsbuchse (34) auf. Dabei ist der Führungsstempel (33) zu seinem in Fig. 2 oberen Ende hin mit einem abgesetzten Zylinderabschnitt (35) und einem sich anschließenden Gewindezapfen (36) versehen. Der Zylinderabschnitt (35) ist fest in eine Bohrung (37) der Schablonenplatte (1) eingepreßt, und der Führungsstempel wird dort durch eine Mutter (38) verspannt.

Zentrisch zur Achse (41) eines jeden Führungsstempels (33) sitzt die zugehörige, mit Schlüsselflächen (341) versehene Führungsbuchse (34) mit einem Zylinderabsatz (42) fest eingepreßt in einer entsprechend bemessenen Bohrung (43) der Schablonenplatte (2). Ihre Länge entspricht etwa 30 Prozent der Länge (12) des Stempelschaftes und dessen doppeltem Durchmesser. Auf diese Weise ist ein verkantungsfreies Verstellen möglich. Es sind zudem die Durchmesser von Stempelschaft und Führungsbuchse so einander angepaßt, daß praktisch kein selbsttätiges Verstellen eintreten kann.

Die Handverstellung der beiden Schablonenplatten gegeneinander erfolgt aber weitgehend ruckfrei, da die Führungsbuchse (34) aus Lagerwerkstoff wie Messing oder dergleichen bestehen kann und der Führungsstempel (33) aus Stahl besteht und sein Schaft (331) geschliffen ist.

Die Bezugsachse für die Einstellung aller vier Bohrbuchsen (12-15) wird durch die Bohrbuchse (14) definiert. Sie hat einen Abstand b von der Unterseite (44) der Schablonenplatten.

Die Schablone läßt sich daher dadurch einrichten, daß man sie auf eine Leiste (45) bekannter Höhe aufstellt, wenn es sich um eine Haustür handelt, also in Höhe der Bohrbuchsen (12) ein Haustürdrücker eingesetzt werden soll. Ist dagegen in Höhe der Bohrbuchsen (13) ein Wohnungstür-Drücker einzusetzen, so verwendet man eine um das Maß e kürzere Leiste (45). Die Maße e und f betragen der DIN-Normung entsprechend regelmäßig 20 mm.

Anstatt die Höhe von der Unterseite (44) aus abzuleiten, kann man auch die Höhe des Drückers direkt festlegen, etwa durch die Kerben (22, 23) in Höhe der Ebenen (46, 47) der Bohrbuchsen (12, 13), zumal die Maße c und d wiederum konstant sind.

In der Achse der Bohrbuchse (14) zur Aufnahme des Schlüsselzylinders wird eine größere Aufbohrung (48) und in der Achse der Bohrbuchse (15) eine kleinere Aufbohrung (49) hergestellt, die dann durch Fräsen längs der Linien (50) zu einer langgestreckten Höhlung verbunden werden.

Es bleibt nun das Festlegen der lotrechten Bohrbuchsen-Achsenebene (E1) zum freien Randteil bzw. zum Falz (7) des Türblattes. Dieser Abstand kann sich bei verschiedenen Konstruktionen ändern, was hier durch Auswechseln der zylindrischen Anschlagkörper (6) berücksichtigt wird, die in entsprechenden Durchmesserstufen vorrätig gehalten werden und zum Ausschluß einer Verwechslungsgefahr deutlich gekennzeichnet sein sollten. Ausgegangen ist zunächst von einer Zylinderscheibe mit einem Außendurchmesser d1 = 80 mm, der das meist verwendete Abstandsmaß a2 = 65 mm betrifft. Mit Strichpunktlinien sind in Fig. 3 der größte berücksichtigte Außendurchmesser d2 = 130 mm und der kleinste d3 = 60 mm eingezeichnet. Bei einem vorgegebenen Achsenabstand al zwischen den beiden Achsenebenen (E1, E2) ergibt sich dann ein reeller Abstand (a2) der Achsenebene (E1) vom Falzgrund = a1-r1.

Das ganze System kann aber dadurch quer zu den beiden Achsenebenen verändert werden, daß man eine dritte Achsenebene (E3) für die Schiebeführungen mit fertiggestellten Bohrungen (371) vorsieht und dadurch einen Abstand a4 erhält.

Eine andere Möglichkeit, das Maß a2 ohne Auswechseln von Anschlagkörpern zu erreichen, ist in Fig. 5 gezeigt. Dort ist zentrisch zur Führungsachse (41) ein quadratischer Halterahmen (51) vorgesehen, der beispielsweise innen an der Schablonenplatte (1) angebracht sein kann. Es läßt sich auch eine solche quadratische Haltefläche außen auf dem undrehbar an dieser Schablonenplatte gehaltenen Führungsstempel (33) vorsehen. Die vier achsparallelen Außenflächen (f1-f4) des so gebildeten Anschlagkörpers (61) haben somit die stufenweise ansteigenden Abstände (h1-h4) von der Führungsachse (41), die nach Bedarf durch Umstecken und Verdrehen um 90° zur Wirkung gebracht werden können. Dieser Anschlagkörper besteht ebenso wie der Anschlagkörper (6) zweckmäßigerweise aus Leichtmetall wie eine Aluminiumlegierung, da die Anschläge praktisch keiner Beschädigungsgefahr unterliegen und durch ihr geringes Gewicht die Handhabung erleichtern.

Anstatt einen solchen Anschlagkörper rechteckig auszuführen, kann er auch eine andere Prismenform haben. Bedeutsam ist nur, daß zwischen den Außenflächen f1 bis fx die gleichen Teilungswinkel eingehalten werden wie zwischen den Umsteck-Innenflächen oder wie auch immer gestalteten Halterungen. Dabei können naturgemäß auch waagerecht zueinander versetzte Aufnahmen wie die Bohrungen (371) vorgesehen sein.

Während die Anschlagkörper (6, 61) mechanisch kaum beansprucht werden, sind die Bohrbuchsen (12—15) vor allem auf ihrer Innenfläche erheblicher mechanischer Beanspruchung unterworfen und müssen doch ihre Paß- und Formgenauigkeit behalten. Sie werden daher zweckmäßigerweise aus einem festen, harten und verschleißwiderstandsfähigen Werkstoff wie gehärtetem Edelstahl, Hartmetall oder dergleichen hergestellt. Es kann auch zweckmäßig sein, auf ihrer Innenfläche eine Schicht aus gegebenenfalls noch härterem Werkstoff wie polykristallinen Diamant oder dergleichen anzubringen.

In Fig. 4 ist durch eine Bohrbuchse (12) und die Schablonenplatte (1) eine Kopfschraube (54) nach innen geführt und in das Muttergewinde einer zylindrischen Paßscheibe (55) eingeschraubt, die damit einen Ausrichtvorsprung bildet, der in die entsprechende Fertigbohrung des Türblattes wieder eingreifen kann. Diese Wiederausrichtung ist notwendig, wenn nach dem Ausbohren eine Türseite mit einer Aufdoppelung irgendeiner Verkleidung versehen werden soll, die wiederum von außen anzubohren ist.

**Patentansprüche**

1. Bohrschablone zum Herstellen von Bohrungen für Schlösser, Drücker, Schlüssel und dergleichen an Türen, gekennzeichnet durch zwei parallel zueinander gleichliegend und gegeneinander unverdrehbar gehaltene Schablonenplatten (1, 2), die mit einer Mehrzahl jeweils gleichachsiger Bohrer-Querführungen (27) versehen und zu einem Seitenrand hin quer zu ihrer Ebene mittels einer Querverbindung verstellbar verbunden sind, die zwei zu den oberen und unteren Enden der Schablonenplatten (1, 2) hin angeordnete Schiebeführungen (4, 5) aufweist, wobei zur Anlage der Schablone mit veränderlichem Abstand einer Bezugslinie einer Schablonenplatte vom freien Rand beziehungsweise dem Türfalz einer Türblattes wenigstens ein Anschlag mit auswechselbarem oder verdrehbarem Anschlagkörper (6, 61) vorgesehen ist.

2. Bohrschablone nach Anspruch 1, dadurch gekennzeichnet, daß die Schiebeführungen (4, 5) teleskopisch mit jeweils einem Führungsstempel (33) ausgebildet sind, der mit einem ersten Ende an einer ersten Schablonenplatte (1) fest eingespannt ist und in eine an der zweiten Schablonenplatte (2) angeordnete Führungsbuchse (34) verschiebbar eingreift.

3. Bohrschablone nach Anspruch 1 oder 2, dadurch gekennzeichnet, daß zwischen den Schablonenplatten (1, 2) zu beiden Schiebeführungen (4, 5) ausgerichtet identische Anschlagkörper (6) angebracht sind, die insbesondere auswechselbar auf den Führungsstempeln sitzen.

4. Bohrschablone nach Anspruch 2 oder 3, dadurch gekennzeichnet, daß die Anschlagkörper (6) als Zylinderringe ausgebildet und drehbar auf zylindrischen Führungsstempeln (33) angebracht sind.

5. Bohrschablone nach Anspruch 3, dadurch gekennzeichnet, daß die Anschlagkörper (61) gegenüber einer Schablonenplatte (1) in mehreren Drehlagen festlegbar vorgesehen sind und eine Mehrzahl insbesondere achsparalleler Außenflächen (f1-f4) aufweisen, die definierte unterschiedliche Abstände (h1-h4) von einer gemeinsamen Bezugs-Querebene haben.

6. Bohrschablone nach Anspruch 5, dadurch gekennzeichnet, daß die Anschlagkörper (61) wenigstens außen prismenförmig gestaltet sind und umsteckbar auf einer Halterungsfläche insbesondere eines Führungsstempels (33) sitzen.

7. Bohrschablone nach Anspruch 6, dadurch gekennzeichnet, daß die Außenflächen (f1-f4) unter gleicher Winkelteilung angeordnet sind, wie sie zwischen dem Anschlagkörper (61) und dessen Träger bzw. an dessen Kupplungsmitteln vorgesehen ist.

8. Bohrschablone nach einem der Ansprüche 3 bis 7, dadurch gekennzeichnet, daß mehrere wahlweise einzusetzende Aufnahmen (371) für Anschlagkörper (6, 61) mit unterschiedlichen Abständen zu einer lotrechten Bezugsebene insbesondere einer Seitenfläche (3) der Schablonenplatte (1, 2) vorgesehen sind.

9. Bohrschablone nach Anspruch 1, dadurch gekennzeichnet, daß die Bohrer-Querführungen (27) in fest vorgegebener, insbesondere genormter Anordnung zu einer Bezugsführung (12), vorzugsweise in einer gemeinsamen lotrechten Ebene mit dieser vorgesehen sind.

10. Bohrschablone nach Anspruch 9, dadurch gekennzeichnet, daß lotrecht unter einer Bezugsführung für einen Haustür-Drücker weitere Bohrer-Querführungen (13-15) für einen Wohnungstür-Drücker und zwei gesonderte Schließzylinder angeordnet sind.

11. Bohrvorrichtung nach Anspruch 10, dadurch gekennzeichnet, daß an wenigstens einer Seitenfläche (3) einer Schablonen-Platte (1, 2) mindestens eine Markierung (22, 23) wie eine Kerbe für die einen Haustür-Drücker (12) und/ oder einen Wohnungstür-Drücker (13) bestimmende Bohrer-Querführung.

12. Bohrschablone nach einem der Ansprüche 1 bis 11, dadurch gekennzeichnet, daß alle Bohrer-Querführungen (27) mit Bohrbuchsen (12-15) aus hartem verschleißfesten Werkstoff wie gehärteter Edelstahl oder aus Hartmetall besetzt sind.

13. Bohrschablone nach einem der Ansprüche 1 bis 12, dadurch gekennzeichnet, daß die Querführungen (27, 12-15) und Anschlagkörper (6, 61) aus formbeständigem Metall bestehen, die Schablonen-Platten (1, 2) jedoch aus einem formbeständigen festen und harten wärmeisolierenden Werkstoff gebildet sind.

14. Bohrschablone nach Anspruch 13, dadurch gekennzeichnet, daß die Führungsstempel (33) aus Stahl und die Führungsbuchsen (34) aus gleitgünstigem Lagerwerkstoff, z.B. aus Messing bestehen.

15. Bohrschablone nach Anspruch 14, dadurch gekennzeichnet, daß die Anschlagkörper (6, 61) aus Leichtmetall, insbesondere einer Aluminium-Legierung bestehen.

16. Bohrschablone nach Anspruch 13, dadurch gekennzeichnet, daß die Schablonen-Platten (1, 2) aus vielschichtigem Panzer-Sperrholz insbesondere mit einer Dicke von 12-15 mm bestehen.

17. Bohrschablone nach einem der vorhergehenden Ansprüche, dadurch gekennzeichnet, daß die Schablonen-Platten (1, 2) mit der gleichen Höhe (a) wie der Schloßkasten eines Bezugs-Türschlosses ausgeführt sind.

18. Bohrschablone nach einem der vorhergehenden Ansprüche, gekennzeichnet durch wenigstens einen in der Achse einer Bohrer-Querführung (27) an der Innenseite einer Schablonenplatte (1) lösbar anzubringenden Ausrichtvorsprung (55) zum passenden Eingriff in eine aufgebohrte Bezugs-Bohrung.

19. Bohrschablone nach Anspruch 18, dadurch gekennzeichnet, daß der Ausrichtvorsprung (55) in Form eines Ringes oder einer Scheibe mit Innengewinde ausgebildet ist, in das eine von außen durch eine Bohrbuchse angebrachte Schraube (54) eingreift.

## Revendications

1. Gabarit de perçage pour l'exécution d'alésages pour des serrures, loquets, clés et autres objets sur des portes caractérisé par deux plaques de gabarit (1, 2) parallèles, de même sens et bloquées l'une par rapport à l'autre, qui sont munies de plusieurs guidages transversaux (27) de même axe pour le foret et qui sont reliés de façon réglable à un bord latéral perpendiculairement à leur plan à l'aide d'un raccord transversal qui présente deux glissières (4, 5) placées aux extrêmités supérieures et inférieures des plaques de gabarit (1, 2), une butée au moins avec corps de butée (6, 61) interchangeable ou rotative étant prévue pour positionner le gabarit en modifiant l'écart d'une ligne de référence d'une plaque de gabarit par rapport au bord libre ou à la feuillure de porte d'un vantail.

2. Gabarit de perçage selon la revendication 1 caractérisé en ce que les glissières (4, 5) ont une forme téléscopique et possèdent chacune un tampon de guidage (33) qui est bloqué fixement à une première extrêmité à une première plaque de gabarit (1) et qui s'aggripe avec déplacement latéral dans un canon de perçage (34) placé sur la seconde plaque de gabarit (2).

3. Gabarit de perçage selon la revendication 1 ou 2 caractérisé en ce que des corps de butée (6) identiques sont placés entre les plaques de gabarit (1, 2), sont alignés sur les deux glissières (4, 5) et sont logés en particulier sur les tampons de guidage de manière interchangeable.

4. Gabarit de perçage selon la revendication 2 ou 3 caractérisé en ce que les corps de butée (6) ont la forme de bagues cylindriques et sont posés sur des tampons de guidage cylindriques (33) où ils peuvent tourner.

5. Gabarit de perçage selon la revendication 3 caractérisé en ce que les corps de butée (61) sont prévus fixables par rapport à une plaque de gabarit (1) dans plusieurs positions rotatives et présentent plusieurs surfaces externes (fl-f4) particulièrement parallèles à l'axe, qui sont à des écarts différents et définis (hl-h4) d'un plan perpendiculaire commun de référence.

6. Gabarit de perçage selon la revendication 5 caractérisé en ce que les corps de butée (61) ont au moins à l'extérieur la forme d'un prisme et sont fixés sur une surface de support en particulier d'un tampon de guidage (33).

7. Gabarit de perçage selon la revendication 6 caractérisé en ce que les surfaces extérieures (fl-f4) sont placées sous la même subdivision d'angle que prévue entre le corps de butée (61) et son support ou à ses moyens d'accouplement.

8. Gabarit de perçage selon l'une des revendications 3 à 7 caractérisé en ce que plusieurs logements (371) à utiliser au choix pour les corps de butée (6, 61) à des écarts divers d'un plan de référence perpendiculaire en particulier d'une surface latérale (3) de la plaque de gabarit (1, 2).

9. Gabarit de perçage selon la revendication 1 caractérisé en ce que les guidages transversaux (27) de la perceuse sont prévus à un emplacement bien prédonné, en particulier normalisé par rapport à un guidage de référence (12), de préférence dans un plan vertical commun avec celui-ci.

10. Gabarit de perçage selon la revendication 9 caractérisé en ce que d'autres guidages transversaux (13—15) de la perceuse sont placés sous un guidage de référence pour un loquet de porte d'appartement et deux verrins de serrage séparés.

11. Gabarit de perçage selon la revendication 10 caractérisé en ce que, au moins sur une surface latérale (3) d'une plaque de gabarit (1, 2), soit prévu au moins un marquage (22, 23) comme une encoche pour un loquet de porte d'immeuble (12) et/ou un loquet (13) de porte d'appartement caractérisant la guidage transversal de la perceuse.

12. Gabarit de perçage selon l'une des revendications 1 à 11 caractérisé en ce que tous les guidages transversaux (27) de la perceuse sont équipés de canons de perçage (12—15) en matériau dur résistant à l'usure comme l'acier inoxydable ou un métal dur.

13. Gabarit de perçage selon l'une des revendications 1 à 12 caractérisé en ce que les guidages transversaux (27, 12—15) et les corps de butée (6, 61) en métal résistant à la déformation, les plaques de gabarit (1, 2) sont cependant formés d'un matériau résistant à la déformation, dur et calorifuge.

14. Gabarit de perçage selon la revendication 13 caractérisé en ce que les tampons de guidage (33) sont en acier et que les canons de perçage (34) en un matériau de palier favorable au glissement, comme le laiton par ex.

15. Gabarit de perçage selon la revendication 14 caractérisé en ce que les corps de butée (6, 61) sont en métal léger, en particulier en un alliage d'aluminium.

16. Gabarit de perçage selon la revendication 13 caractérisé en ce que les plaques de gabarit (1, 2) sont en contreplaqué blindé multicouches d'une épaisseur de 12 à 15 mm.

17. Gabarit de perçage selon l'une des revendications précédentes caractérisé en ce que les plaques de gabarit (1, 2) ont la même hauteur (a) que la case de serrure d'un verrou de porte de référence.

18. Gabarit de perçage selon l'une des revendications précédentes caractérisé par au moins un épaulement d'alignage (55) à fixer de manière démontable dans l'axe d'un guidage transversal de perçage (27) sur la face interne d'une plaque de gabarit (1) par s'aggriper dans un alésage de référence percé.

19. Gabarit de perçage selon la revendication 18 caractérisé en ce que l'épaulement d'alignage (55) a la forme d'une bague ou d'un disque avec filetage interne dans lequel pénètre une vis (54) placée dans un canon de perçage.

**Claims**

1. A drilling template for making holes for locks, door handles, keys and the like in doors, characterized by two template panels (1 and 2) aligned so as to be parallel to each other and held so as not to be able to be twisted in relation to each other, said panels being provided with a plurality of respectively coaxial transverse drill guides (27) and towards one side edge are adjustably connected with each other by means of a transverse connection transversely in relation to their own plane, such transverse connection having two sliding guides (4 and 5) arranged towards the upper and lower ends of the template panels (1 and 2), and for placement of the template with an adjustable distance of a reference line of one template panel from the free edge or, respectively, from the rabbet of door member at least one abutment with replaceable or rotatable abutment member (6 and 61) is provided.

2. The drilling template as claimed in claim 1, characterized in that the sliding guides (4 and 5) have a telescopic design and each have one guide plunger (33), whose one first end is firmly attached to a first one (1) of said panels and fits in a guide bushing (34) arranged on the second template panel (2) for sliding motion.

3. The drilling template as claimed in claim 1 or claim 2, characterized in that identical abutment members (6) are attached between the template panels (1 and 2) and aligned with both the sliding guides, such abutment members being more particularly seated in a replaceable manner on the guide plungers.

4. The drilling template as claimed in claim 2 or claim 3, characterized in that the abutment members (6) are designed in the form of cylindrical rings and are mounted on the cylindrical guide plungers (33) in a rotatable manner.

5. The drilling template as claimed in claim 3, characterized in that the abutment members (61) are adapted to be able to locked in a number of different positions of rotation in relation to one template panel (1) and have a plurality of outer faces (fl through f4) which are more particularly parallel to the axis and have different set distances (h1 through h4) from a common transverse reference plane.

6. The drilling template as claimed in claim 5, characterized in that the abutment members (61) at least externally have a prismatic form and are mounted on a retaining surface, more especially on a guide plunger (33) so that they may be plugged in different settings.

7. The drilling template as claimed in claim 6, characterized in that the external faces (fl through f4) are arranged with an equal angular pitch as is provided between the abutment member (61) and its carrier or, respectively, on its coupling means.

8. The drilling template as claimed in any one of the preceding claims 3 through 7, characterized in that a plurality of receiving means (371), able to be set in place selectively, are provided for abutment members (6 and 61) with different distances from a perpendicular reference plane and more especially from a side face (3) of the template panel (1 and 2).

9. The drilling template as claimed in claim 1, characterized in that the transverse drill guides (27) are provided in a predetermined and more particularly standardized arranged in relation to a reference guide (12) and preferably in a common upright plane with the same.

10. The drilling template as claimed in claim 9, characterized in that perpendicularly under a reference guide for an outside door handle further transverse drill guides (13 through 15) are provided for an apartment door hand and two separate lock cylinders.

11. The drilling template as claimed in claim 10, characterized in that on at least one side face (3) of a template panel (1 and 2) there is a transverse drill guide indicating at least one marking (22 and 23) such as a notch for an outside door handle (12) and/or an apartment door handle (13).

12. The drilling template as claimed in any one of the preceding claims 1 through 11, characterized in that all transverse drill guides (27) are armed with drilling bushings (12 through 15) of a hard, wear-resistant material such as hardened stainless steel or a metallic carbide.

13. The drilling template as claimed in any one of the preceding claims 1 through 12, characterized in that the transverse guides (27, 12 through 15) and the abutment members (6 and 61) consist of dimensionally stable material, whereas the template panels (1 and 2) are made of a dimensionally stable, strong and hard, thermally insulating material.

14. The drilling template as claimed in claim 13, characterized in that the guide plunger (33) consists of steel and the guide bushings (34) consist of a bearing material, as for instance brass, with good running properties.

15. The drilling template as claimed in claim 14, characterized in that the abutment members (6 and 61) consist of a light alloy and more especially an aluminum alloy.

16. The drilling template as claimed in claim 13, characterized in that the template panels (1 and 2) consist of multilayer armored plywood, more particularly having a thickness of 12 to 15 mm.

17. The drilling template as claimed in any one of the preceding claims, characterized in that the template panels (1 and 2) are made with the same height (a) as the casing of a lock to be, installed.

18. The drilling template as claimed in any one of the preceding claims, characterized by at least one aligning projection (55) to be detachably arranged on the axis of a transverse drill guide (27) on the inner side of a template panel (1) for suitably fitting in a counterbored fitting hole.

19. The drilling template as claimed in claim 18, characterized in that the aligning projection (55) is made with the shape of a ring or a disk with a female thread, in which there is fitting a screw (54) introduced into such hole from the outside.

Fig 1

Fig 2

Fig 5

2

Fig 4

Fig 3

3